# EUROPEAN PATENT SPECIFICATION

(11) **EP 3 122 141 B1**
(45) Date of publication and mention of the grant of the patent: **08.07.2020**
(21) Application number: 15765268.6
(22) Date of filing: 17.03.2015
(51) Int. Cl.: H04L 27/34, H04L 27/00, H04L 27/32, H04L 1/00, H04L 5/00

(54) **TERMINAL DEVICE AND BASE STATION DEVICE**
ENDGERÄTEVORRICHTUNG UND BASISSTATIONSVORRICHTUNG
DISPOSITIF TERMINAL ET DISPOSITIF DE STATION DE BASE

(30) Priority: 20.03.2014 JP 2014058158
(43) Date of publication of application: 25.01.2017
(73) Proprietor: Sharp Kabushiki Kaisha, Osaka 5908522 (JP)
(72) Inventor: NAKAMURA Osamu, Sakai City Osaka 590-8522 (JP); SUZUKI Shoichi, Sakai City Osaka 590-8522 (JP); GOTO Jungo, Sakai City Osaka 590-8522 (JP); NAKASHIMA Daiichiro, Sakai City Osaka 590-8522 (JP); HAMAGUCHI Yasuhiro, Sakai City Osaka 590-8522 (JP)
(74) Representative: Müller-Boré & Partner Patentanwälte PartG mbB
(86) International application number: PCT/JP2015/057925
(87) International publication number: WO 2015/141688

(56) References cited:
- JP-A- 2006 217 173
- PANASONIC: "MCS Indication for 256QAM", 3GPP DRAFT; R1-140502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050736034, Retrieved from the Internet: URL:http://www.3gpp.org/ftp/Meetings_3GPP_ SYNC/RAN/RAN1/Docs/ [retrieved on 2014-02-09]
- INTEL CORPORATION: "CQI/MCS/TBS Tables for 256QAM and Relevant Signaling", 3GPP DRAFT; R1-140118 INTEL - 256QAM_TABLES_SIGNALING - COPY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050735682, Retrieved from the Internet: URL:http://www.3gpp.org/ftp/Meetings_3GPP_ SYNC/RAN/RAN1/Docs/ [retrieved on 2014-02-09]
- "3rd Generation Partnership Project; Technical Specification Group Radio Access Network; Evolved Universal Terrestrial Radio Access (E-UTRA); Physical layer procedures (Release 12)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.0.0, 15 December 2013 (2013-12-15), pages 1-186, XP050729032, [retrieved on 2013-12-15]
- PANASONIC: 'MCS Indication for 256QAM' 3GPP TSG- RAN WG1#76, RL-140502, [Online] 31 January 2014, XP050736034 Retrieved from the Internet: <URL:http://www.3gpp.org/ftp/tsg_ran/ WG1_RL1/TSGR176/Docs/R1-140502.zip> [retrieved on 2015-05-26]
- NTT DOCOMO: 'Design of CQI/MCS Table for 256QAM' 3GPP TSG-RAN WG1#76, RL-140620, [Online] 01 February 2014, XP050736145 Retrieved from the Internet: <URL:http://www.3gpp.org/ftp/ tsg_ran/WG1_RL1/TSGR1_76/Docs/R1-140620.zip > [retrieved on 2015-05-26]
- BROADCOM CORPORATION: 'MCS table design for 256 QAM' 3GPP TSG-RAN WG1#76B, RL-141501, [Online] 22 March 2014, XP050787170 Retrieved from the Internet: <URL:http://www. 3gpp.org/ftp/tsg_ran/WG1_RL1/TSGR1_76b/Docs /R1- 141501.zip> [retrieved on 2015-05-26]

## Description

### Technical Field

The present invention relates to a terminal apparatus and a base station apparatus.

### Background Art

In recent years, smartphones or the like have been popular, and there is an increasing need for high-speed wireless transmission. 3GPP (The Third Generation Partnership Project), which is one of standardizing organizations, has been working to establish specifications of LTE (Long Term Evolution). Now, specifications of Rel-11 (Release 11) have been almost completed, and establishing of specifications of Rel-12 is in progress.

In LTE according to Rel-11 and older releases, as for a modulation scheme for downlink, QPSK (Quadrature Phase Shift Keying), 16-QAM (Quadrature Amplitude Modulation), and 64-QAM are supported. In QPSK, it is possible to transmit two bits using one modulation symbol. In 16-QAM, it is possible to transmit 4 bits using one modulation symbol. In 64-QAM, it is possible to transmit 6 bits using one modulation symbol. That is, 16-QAM provides higher a frequency utilization efficiency than QPSK, and 64-QAM provides higher a frequency utilization efficiency than 16-QAM. However, as the number of bits in one modulation symbol increases, the probability of occurrence of a bit error increases. In LTE, a technique called adaptive modulation is employed. In this technique, a modulation scheme is adaptively selected depending on a channel state between a base station apparatus (eNB, evolved Node B) and a terminal apparatus (UE, User Equipment). Note that in LTE, in addition to the modulation scheme, the coding rate of error correction code is also changed adaptively. For example, a terminal apparatus estimates a downlink channel state based on a reference signal transmitted from a base station apparatus, and the terminal apparatus notifies the base station apparatus of channel quality information (channel quality indicator (CQI) generated based on the estimated channel state. In this process, the terminal apparatus has a table, called a CQI table, of 4-bit (16 values of) CQI values, and notifies the base station apparatus of an index related to a CQI table value that is closest to the estimated CQI. The base station apparatus has a CQI table similar to that the terminal apparatus has, and determines corresponding CQI from the notified CQI index. The base station apparatus selects a modulation scheme and a coding rate (MCS, Modulation and Coding scheme) taking into account the determined CQI, and performs downlink transmission using the selected MCS. The base station apparatus has a table called an MCS table, and selects one MCS from the MCS table. The base station apparatus notifies the terminal apparatus of an index of the selected MCS, and performs data transmission using PDSCH (Physical Downlink Shared CHannel) generated using the notified MCS. Note that in the MCS table in LTE, a modulation scheme and a value of a TBS (Transport Block Size) are defined instead of defining the modulation scheme and the coding rate. A coding rate is determined from the TBS and an allocated radio resource. The terminal apparatus has an MCS table similar to that the base station apparatus has, and the terminal apparatus determines a corresponding MCS from the notified MCS index. The terminal apparatus performs the demodulation and decoding of PDSCH using the determined MCS. In LTE, by adaptively selecting MCS depending on the channel state as described above, it is possible to achieve a high throughput.

In Rel-12 of LTE, it is under discussion to introduce 256-QAM that allows it to transmit 8 bits using one modulation symbol. In the specifications of Rel-11 of LTE, the CQI table and the MCS table are defined only for up to 64-QAM. Therefore, in the existing specifications, the base station apparatus is not capable of notifying, via PDCCH (Physical Downlink Control CHannel), the terminal apparatus of control information of MCS assumed to be used for 256-QAM. Furthermore, the existing specifications do not allow the terminal apparatus to notify the base station apparatus of CQI assumed to be used for 256-QAM. In view of the above, in Rel-12 of LTE, establishing of specifications of the CQI table and the MCS table in which supporting of 256-QAM is assumed (hereinafter, referred to as the Rel-12 CQI table and the Rel-12 MCS table) is under discussion.

In the standardization of Rel-12, it has been agreed that 4 bits and 5 bits will be used respectively for notification of indexes of the CQI table and the MCS table that will be newly introduced in Rel-12 (hereinafter respectively referred to as the Rel-12 CQI table and the Rel-12 MCS table) as with the CQI table and the MCS table according to Rel-11 or older releases (hereinafter respectively referred to as the Rel-8 CQI table and the Rel-8 MCS table). In order to support 256-QAM without changing the number of bits used to notify of an index of a new CQI table from the number of bits used for the existing CQI tables, it is necessary to exclude some CQI supported in the existing specifications (for example, Rel-8) from the new CQI table. In order to support 256-QAM without changing the number of bits used to notify of an index of a new MCS table from the number of bits used for the existing MCS tables, it is necessary to exclude some MCS supported in the existing specifications (for example, Rel-8) from the new MCS table.

In the discussion of standardization of Rel-12, it has been suggested that, of MCS supported in the existing MCS table, some CQI, associated with MCS having a low frequency utilization efficiency supported in the MCS table according to the existing specifications, will not be supported in the new CQI table, but, instead, information used for such CQI will be used for MCS to support 256-QAM (NPL 1, NPL 2). This makes it possible to achieve a high throughput in 256-QAM while keeping, to a certain degree, ability to transmit data in a transmission channel that may have an abrupt change.

### Citation List

### Non Patent Literature

NPL 1: R1-140034, Huawei, HiSilicon, "CQI/MCS table design for 256-QAM," Prague, Czech Republic, Feb. 2014.

NPL 1: R1-140555, Nokia, NSN, "On CQI/MCS/TBS table design for 256-QAM," Prague, Czech Republic, Feb. 2014.

### Summary of Invention

### Technical Problem

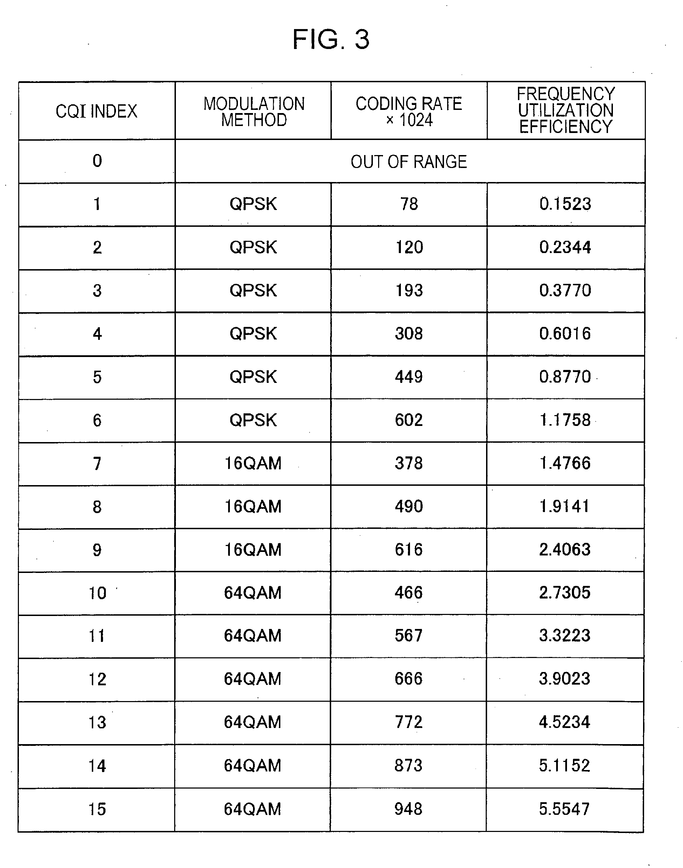

In LTE, resources are dynamically allocated according to control information by DS (dynamic scheduling) or semi-persistently allocated by SPS (Semi-Persistent Scheduling). In the specifications of LTE, one of requisites to set SPS is that the MSB (Most Significant Bit) of 5-bit MCS indexes should be set to 0 as shown in Fig. 3. That is, in SPS, 15 MCS's with low frequency usage efficiencies in the MCS table are used. This is because it is assumed in SPS that low-rate data such as audio data or the like is transmitted with high quality.

On the other hand, as for the Rel-12 MCS table, to introduce 256-QAM, it is suggested to employ a table in which the number of low MCS's is reduced. Therefore, in a state in which the Rel-12 MCS table is set via RRC signaling or the like, if SPS is performed, it is not allowed to select MCS's that are selectable in the Rel-8 MCS table, which may result in a situation in which communication is performed using an improper MCS.

PANASONIC: "MCS Indication for 256QAM", 3GPP DRAFT; Rl-140502, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Prague, Czech Republic; 20140210-20140214 9 February 2014 (2014-02-09), relates to a discussion for MCS indication when introducing 256 QAM for a downlink.

INTEL CORPORATION: "CQI/MCS/TBS Tables for 256QAM and Relevant Signaling", 3GPP DRAFT; R1-140118 INTEL - 256QAM_TABLES_SIGNALING - COPY, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE, vol. RAN WG1, no. Prague, Czech Republic; 20140210 -20140214 9 February 2014 (2014-02-09), relates to a discussion for designing new CQI/MCS/TBS tables, switching mechanism between legacy and new tables, new UE category indicating 256 QAM capability and soft buffer size related signalling.

In view of the above, an object of the present invention is to make it possible to notify of a proper MCS in SPS thereby increasing the throughput.

### Solution to Problem

This problem is solved by the subject-matter of the independent claims.

The invention is defined and limited by the scope of appended claims. In the following description, any embodiment(s) referred to and not falling within the scope of the appended claims, is (are) merely example(s) useful to the understanding of the invention.

### Advantageous Effects of Invention

According to the present invention, it is possible to suppress an increase in control information and it is possible to efficiently support SPS when 256-QAM is introduced.

### Brief Description of Drawings

[Fig. 1] Fig. 1 is a block diagram illustrating a configuration of a wireless communication system according to a first embodiment of the present invention.
[Fig. 2] Fig. 2 is a schematic diagram illustrating a configuration of a base station apparatus according to the first embodiment of the present invention.
[Fig. 3] Fig. 3 is a diagram illustrating an example of a Rel-8 CQI table according to the present invention.
[Fig. 4] Fig. 4 is a diagram illustrating an example of a Rel-12 CQI table according to the present invention.
[Fig. 5] Fig. 5 is a diagram illustrating an example of a Rel-8 MCS table according to the present invention.
[Fig. 6] Fig. 6 is a diagram illustrating an example of a Rel-12 MCS table according to the present invention.
[Fig. 7] Fig. 7 is a diagram illustrating an example of a table that enables SPS according to the present invention.
[Fig. 8] Fig. 8 is a schematic diagram illustrating an example of a configuration of a terminal apparatus according to the first embodiment of the present invention.
[Fig. 9] Fig. 9 is a diagram illustrating a manner in which allocation is performed by SPS according to a second embodiment of the present invention.
[Fig. 10] Fig. 10 is a schematic diagram illustrating an example of a configuration of a base station apparatus according to a second embodiment of the present invention.

### Description of Embodiments

Techniques disclosed in the present description may be applied to various kinds of wireless communication systems including a code division multiple access (CDMA) system, a time division multiple access (TDMA) system, a frequency division multiple access (FDMA) system, an orthogonal FDMA (OFDMA) system, a single carrier FDMA (SC-FDMA) system, and other systems. The terms "system" and "network" may be often used synonymously. The CDMA system may be implemented in a radio technique (standard) such as a universal terrestrial radio access (UTRA), cdma2000 (registered trademark), or the like. The UTRA includes wideband CDMA (WCDMA (registered trademark)) and its advanced versions, and cdma2000 covers IS-2000, IS-95, and IS-856 standards. The TDMA system may implemented in a radio technique such as Global System for Mobile Communications (GSM (registered trademark)). The OFDMA system may be implemented in a radio technique such as Evolved UTRA (E-UTRA), Ultra Mobile Broadband (UMB), IEEE802.11 (Wi-Fi), IEEE802.16 (WiMAX), IEEE802.20, Flash-OFDM (registered trademark), and the like. 3GPP LTE (Long Term Evolution) is E-UTRA in which OFDMA is used on downlink and SC-FDMA is used on uplink. LTE-A is a system, a radio technique, and a standard, of an advanced version of LTE. UTRA, E-UTRA, LTE, LTE-A and GSM (registered trademark) are described in documents issued by an organization called The Third Generation Partnership Project (3GPP), and cdma2000 and UMB are described in documents issued by an organization called The Third Generation Partnership Project 2 (3GPP2). For clarity, an aspect of the present technique is described below as to data communication based on LTE and LTE-A, and terms of LTE and terms of LTE-A are used in many parts of the following description.

Preferable embodiments according to the present invention are described in detail below with reference to accompanying drawings. The following detailed description with reference to the accompanying drawings is given merely to provide examples of embodiments of the present invention and not to limit the invention to only these embodiments. The following detailed description includes specific details for providing thorough understanding of the present invention. However, those skilled in the art will understand that the present invention can be practiced without detailed descriptions of such specific details. For example, the following detailed description is given by way of example for a specific case where the mobile communication system is a 3GPP LTE or LTE-A system, but the techniques disclosed in the following detailed description may also be applied to other arbitrary mobile communication systems except for matters specific to 3GPP LTE or LTE-A. Note that terms used below are defined taking into account functions of the present invention, and they may be different depending on an intention or a custom of a user or an operator. Therefore, it should be understood that the terms should be defined based on the context in the whole description.

In the description of the embodiments, well-known techniques that are not directly related to the present invention are not described. That is, by omitting unnecessary descriptions, the subject matter of the present invention is provided in a more clear manner. That is, in some cases, to prevent the concepts of the present invention from being vague, a description of a known configuration or apparatus may be omitted, or a description may be given in the form of a block diagram to focus on key functions of configurations or apparatuses. To represent more clearly the subject matter of the invention without unclarity, some constituent elements are described in drawings in an exaggerated fashion, a simplified fashion, or omitted. Note that the size of each constituent element does not necessarily correspond to its actual size. Note that through the whole description, similar constituent elements are denoted by similar drawing reference symbols.

Through the whole description, when one part "includes" one constituent element, the one part does not exclude other constituent elements but the one part may further include another constituent element unless otherwise stated. Furthermore, the term "or" in the detailed description or the claims of the invention is used not to mean "exclusive or", but use of "or" is intended to mean "inclusive or". That is, unless otherwise specified or unless clear from the context, a phrase "X uses A or B" is intended to mean any of natural inclusive permutations. That is, the phrase "X uses A or B" is satisfied by any of the following examples: X uses A; X uses B; or X uses both A and B. In addition, articles "a" and "an" used in this application and the appended claims should generally be construed to mean "one or more" unless specified otherwise or clear from the context to be directed to a singular form. Furthermore, in the description, terms such as "... unit", "... device, "module", and the like represent units in which at least one function or operation is performed, and they can be implemented using hardware, software or a combination of hardware and software.

In the following description, the terminal apparatus is a generic expression of user terminal devices of a mobile type or a fixed type such as a user apparatus (User Equipment: UE), a mobile station (Mobile Station (MS), Mobile Terminal (MT)), a mobile station apparatus, a mobile terminal, a subscriber unit, a subscriber station, a wireless terminal, a mobile device, a node, a device, a remote station, a remote terminal, a wireless communication device, a wireless communication terminal, a user agent, an access terminal, and the like. The terminal apparatus may be a cellular telephone device, a cordless telephone device, a session initiation protocol (SIP) telephone device, a smartphone, a wireless local loop (WLL) station, a personal digital assistant (PDA), a tablet device, a laptop device, a hand-held communication device, a hand-held computing device, a satellite radio receiver, a wireless modem card, a USB modem, a router, and/or another processing device for communication via a wireless system. The base station apparatus is a generic expression of arbitrary network-end nodes configured to communicate with a terminal, such as a node B (NodeB), an enhanced node B (eNodeB), a base station, an access point (AP), or the like. Note that RRH (Remote Radio Head which is an apparatus including an outdoor radio unit smaller than the base station apparatus, also called a Remote Radio Unit (RRU), a remote antenna, or a distributed antenna) is one of base station apparatuses. That is, the RRH is a special form of the base station apparatus. For example, the RRH may be a base station apparatus including only a signal processing unit, and determination of a parameter used in the RRH or scheduling may be performed by another base station apparatus.

The terminal apparatus according to the present invention may include a memory configured to store commands associated with various processes described below, and a processor connected to the memory and configured to execute the commands stored in the memory. The base station apparatus according to the present invention may include a memory configured to store commands associated with various processes described below, and a processor connected to the memory and configured to execute the commands stored in the memory.

Embodiments of the present invention are described in detail below with reference to drawings. In the following description, CSI (Channel State Information) includes RI (Rank Indicator) indicating a rank number, PMI (Precoding Matrix Indicator) indicating an index of a precoding matrix, and CQI (Channel Quality Indicator) indicating a combination of a modulation scheme and a coding rate.

### First Embodiment

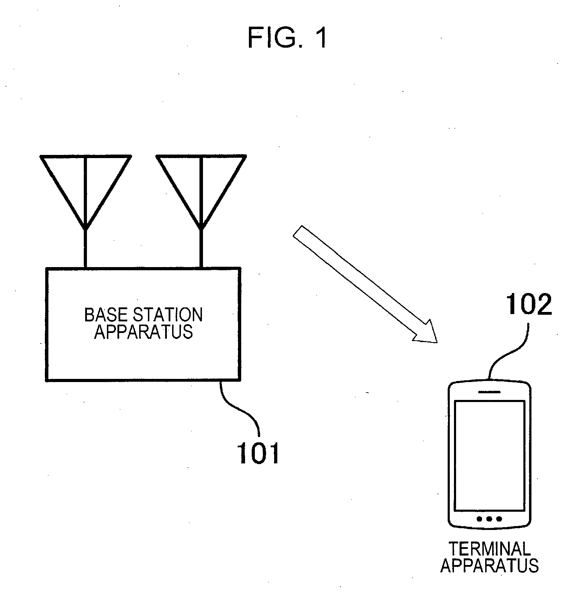

A first embodiment of the present invention is described below with reference to drawing. Fig. 1 illustrates an example of a configuration of a wireless communication system according to the present embodiment. This system includes a base station apparatus 101 and a terminal apparatus 102. Each apparatus may include one or more antenna ports. Herein, the antenna port does not refer to a physical antenna, but refers to a logical antenna that can be recognized by an apparatus with which communication is performed.

In the present embodiment, the base station apparatus 101 performs configuration of a 64-QAM mode or a 256-QAM mode to the terminal apparatus 102. Herein, the 64-QAM mode refers to a setting in which an MCS table, a CQI table, or the like used is configured assuming that 256-QAM is not used in transmission of data of PDSCH, and more specifically, refers to a setting (configuration) in which 256-QAM is not included as modulation schemes in the MCS table applied to PDSCH, or a setting (configuration) in which the MCS table applied to PDSCH includes modulation schemes of QPSK, 16-QAM, and 64-QAM, or a setting (configuration) in which the CQI table used in feedback does not include a modulation scheme of 256-QAM, or a setting (configuration) in which the CQI table used in feedback includes modulation schemes of QPSK, 16-QAM, and 64-QAM, or the like. On the other hand, the 256-QAM mode refers to a setting in which an MCS table, a CQI table, or the like used is configured assuming that data of PDSCH is transmitted using 256-QAM, and more specifically, refers to a setting (configuration) in which the MCS table applied to PDSCH includes at least a modulation scheme of 256-QAM, or a setting (configuration) in which the MCS table applied to PDSCH includes modulation schemes of QPSK, 16-QAM, 64-QAM, and 256-QAM, or a setting (configuration) in which the CQI table used in feedback includes a modulation scheme of 256-QAM, or a setting (configuration) in which the CQI table used in feedback includes modulation schemes of QPSK, 16-QAM, 64-QAM, and 256-QAM, or the like.

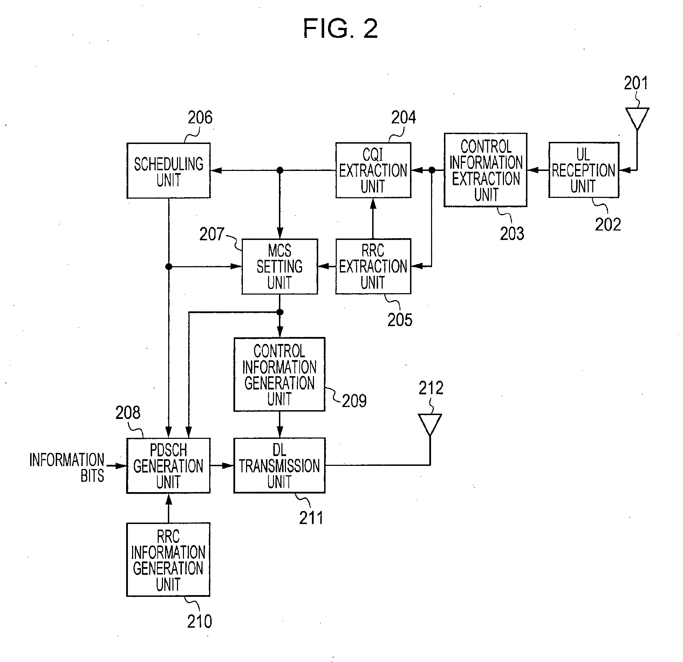

A signal transmitted from the terminal apparatus 102 is received by the base station apparatus 101 via a channel. Fig. 2 illustrates an example of a configuration of the base station apparatus 101. Note that in Fig. 2, only blocks (processing units) necessary in the explanation of the present embodiment of the invention are shown. A signal transmitted from the terminal apparatus 102 is received by a UL reception unit 202 via a receiving antenna 201. The receiving antenna 201 may include a plurality of antennas using a receiving diversity technique, an adaptive array antennal, or the like. The UL reception unit 202 performs processing such as a down-conversion, a Fourier transform, or the like. An output from the UL reception unit 202 is input to a control information extraction unit 203. The control information extraction unit 203 extracts control information transmitted from the terminal apparatus 102. Herein, the control information is control information transmitted using PUCCH (Physical Uplink Control CHannel) which is a channel dedicated to control information, or control information transmitted using PUSCH (Physical Uplink Shared CHannel) which is a channel for transmission of information data. The control information extracted by the control information extraction unit 203 is input to a CQI extraction unit 204 or an RRC extraction unit 205. The RRC extraction unit 205 extracts, from the control information, information indicating that setting of the terminal apparatus 102 in terms of RRC has been performed by the terminal apparatus 102.

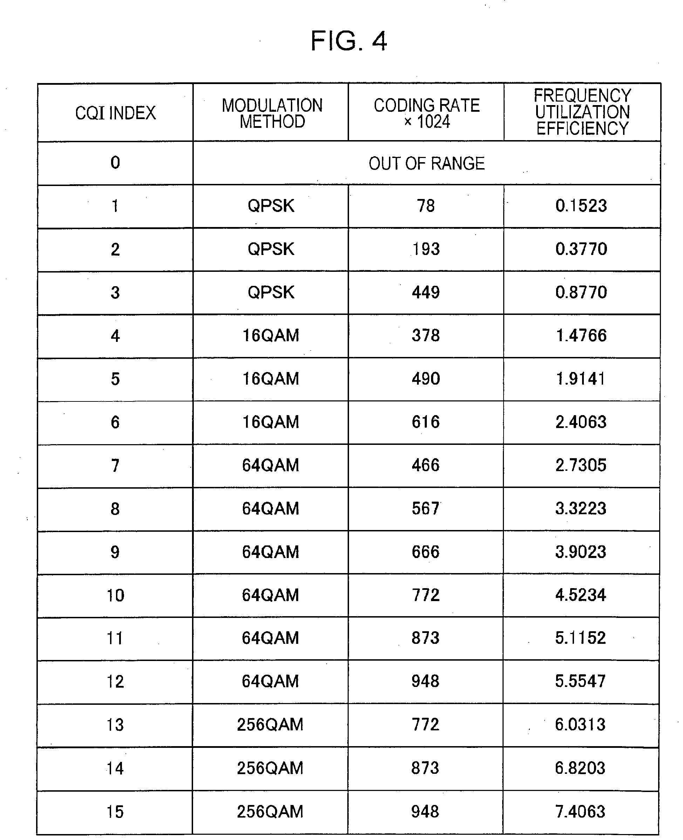

The CQI extraction unit 204 extracts, from the control information input from the control information extraction unit 203, a CQI index transmitted from the terminal apparatus 102. However, the correspondence between the CQI index and information (in terms of a combination of a modulation scheme and a coding rate) varies depending on whether the 64-QAM mode or the 256-QAM mode is used by the terminal apparatus 102 to transmit CQI (when simply described as CQI, the CQI refers to a wideband CQI and a subband CQI, or one of them). In a case where the CQI extraction unit 204 determines that the CQI was transmitted in the 64-QAM mode by the terminal apparatus 102, the CQI extraction unit 204 regards that the terminal apparatus 102 has notified of the CQI index using a Rel-8 CQI table such as that shown in Fig. 3. In a case where the CQI extraction unit 204 determines that the CQI was transmitted in the 256-QAM mode by the terminal apparatus 102, the CQI extraction unit 204 regards that the terminal apparatus 102 has notified of the CQI index using a Rel-12 CQI table such as that shown in Fig. 4. Note that the CQI table shown in Fig. 4 is different from the table shown in Fig. 3 in that indexes for QPSK transmission are deleted, while indexes for 256-QAM transmission are added. Note that the CQI table shown in Fig. 4 is merely an example of a CQI table for the 256-QAM mode. Any CQI table may be employed if it is different from the CQI table shown in Fig. 3 and if it is configured under the assumption that 256-QAM is used in transmission. For example, a table that includes 256-QAM but does not include one or any of QPSK, 16-QAM, and 64-QAM, or a table obtained by deleting CQIs at equal intervals from the table shown in Fig. 3 and replacing them with 256-QAM may be employed.

CQI of the terminal apparatus 102, extracted by the CQI extraction unit 204, is input to the scheduling unit 206 and the MCS setting unit 207. In the scheduling unit 206, a resource is allocated to the terminal apparatus 102 based on the CQI of the terminal apparatus 102. Methods for the resource allocation include dynamic scheduling (DS) and semi-persistent scheduling (SPS). In the dynamic scheduling (DS), resources are allocated depending on the instantaneous state of the terminal apparatus 102, while in the semi-persistent scheduling (SPS), resources are allocated to the terminal apparatus 102 periodically in the time domain and stationary in the frequency domain. In a case where MIMO (Multiple Input Multiple Output) transmission is performed on the downlink, the scheduling is performed taking into account RI (Rank Indicator) or PMI (Precoding Matrix Indicator) notified from the terminal apparatus 102 in addition to CQI. Information, output from the scheduling unit 206, in terms of the allocation to the terminal apparatus 102 and information as to whether the scheduling is DS or SPS are input to the MCS setting unit 207 and the PDSCH generation unit 208.

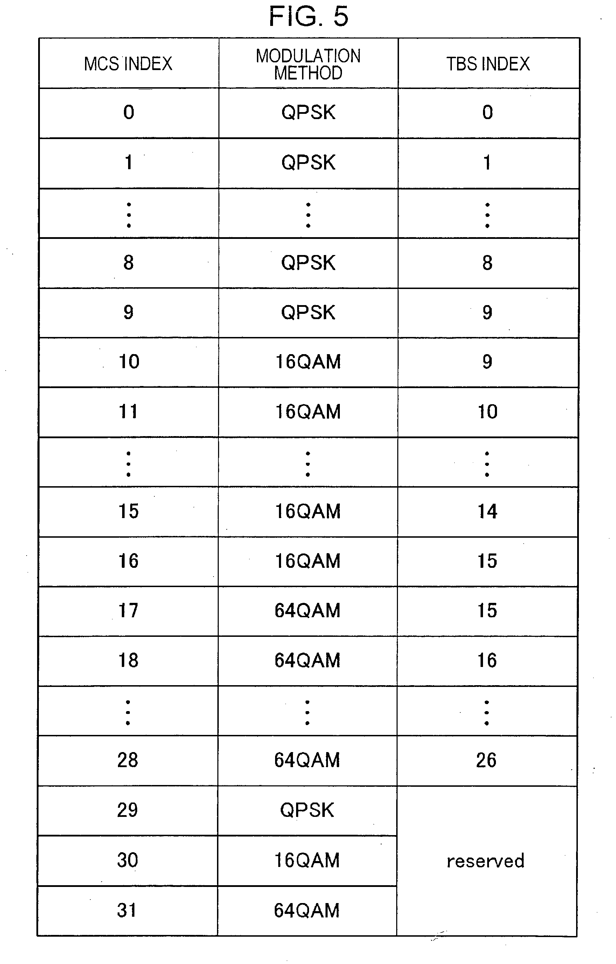

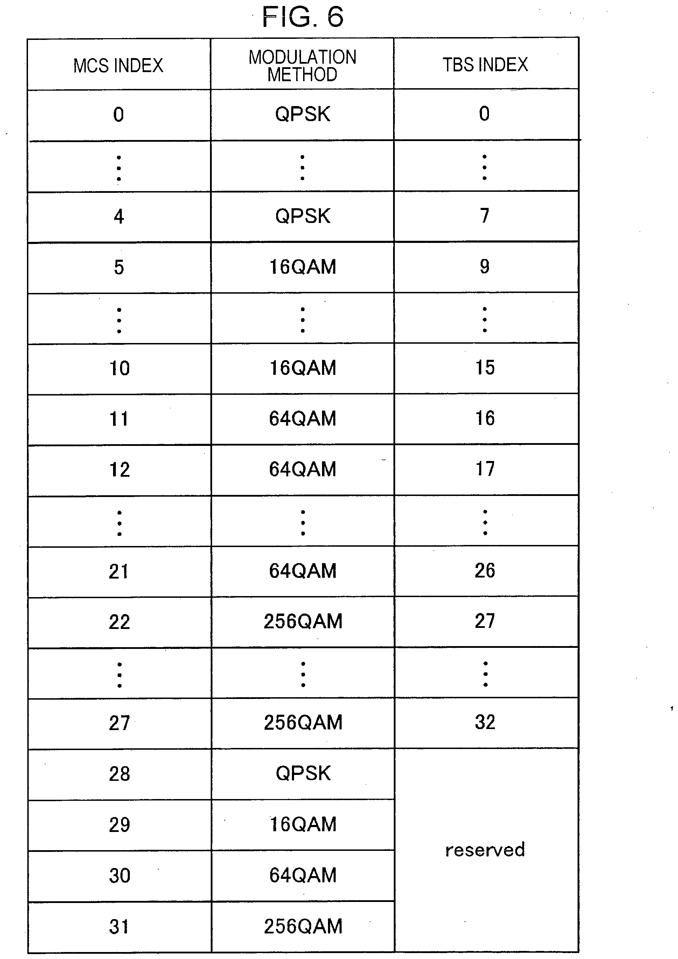

In the MCS setting unit 207, channel quality of the resource used in a next transmission is estimated based on the resource allocation information input from the scheduling unit 206 and CQI input from the CQI extraction unit 204. The MCS setting unit 207 sets MCS so as to obtain a particular error rate based on the estimated channel quality, and generates an MCS index. Note that in a case where the scheduling type information input from the scheduling unit 206 indicates DS, the generated MCS index varies depending on the modulation mode set via the RRC signaling. For example, in a case where the 64-QAM mode is set via the RRC signaling, the MCS setting unit 207 selects an MCS index from the Rel-8 MCS table such as that shown in Fig. 5. Furthermore, in the case where the 256-QAM mode is set, the MCS setting unit 207 selects an MCS index from a Rel-12 MCS table such as that shown in Fig. 6. Note that in the present embodiment, a Rel-12 MCS table different from the MCS table shown in Fig. 6 may be used if QAM up to 256-QAM is supported.

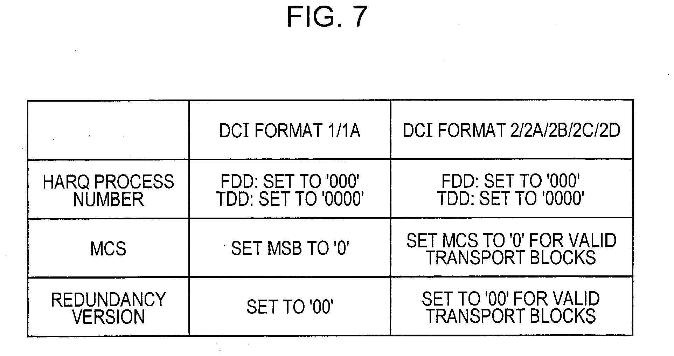

On the other hand, in a case where the scheduling type information input to the MCS setting unit 207 indicates SPS, the MSB (Most Significant Bit) of the 5-bit MCS index is set to 0 based on Fig. 7. That is, in the case where the Rel-8 MCS table is set, the MCS setting unit 207 is not allowed to specify a value in a range of 0 to 31 as the MCS index as shown in Fig. 5, but is allowed to specify a value only in a range from 0 to 15 as the MCS index. Note that in Fig. 7, a DCI format 1, a DCI format 1A, a DCI format 2, a DCI format 2A, a DCI format 2B, a DCI format 2C, and a DCI format 2D each are a format (downlink control information format (DCI format)) for use in notifying the terminal apparatus of control information (downlink control information (DCI)) such as downlink allocation information or the like.

In a case where the Rel-12 MCS table (256-QAM mode) is set via the RRC signaling, if a conventional technique is directly used, the MCS setting unit 207 selects an MCS from MCS indexes of 0 to 15 in the Rel-12 MCS table shown in Fig. 6. However, in the Rel-12 MCS table shown in Fig. 6, QPSK transmission MCSs included in the Rel-8 MCS table shown in Fig. 5 are not included. That is, any MCS that can be set in the Rel-8 MCS table cannot be selected by the MCS setting unit 207, and thus it is impossible to perform transmission using a proper MCS, which results in a reduction in throughput. Note that by using the Rel-12 MCS table also in SPS, it becomes possible to select MCS that provides a higher frequency utilization efficiency. However, SPS is a technique originally introduced mainly to achieve high quality at low transmission rates in transmitting low-rate data such as audio data or the like, and thus a demerit resulting from incapability of selecting proper MCS is larger than a merit resulting from capability of selecting MCS that provides a high frequency utilization efficiency.

In view of the above, in the present embodiment, in a case where SPS is specified by the input scheduling type information, the MCS setting unit 207 sets MCS using the Rel-8 MCS table regardless of the setting (in terms of the modulation mode) performed via the RRC signaling. That is, even in a case where the Rel-12 MCS table (256-QAM mode MCS table) is set via the RRC signaling, the MCS setting unit 207 performs MCS setting on the PDSCH of SPS using the Rel-8 MCS table. Furthermore, the MCS setting unit 207 selects, for PDSCH of SPS, one of indexes from 0 to 15 in the MCS index in the Rel-8 MCS table. This makes it possible to perform transmission using a proper MCS in SPS regardless of the modulation mode set via the RRC signaling.

5 bits indicating the MCS index set by the MCS setting unit 207 are input to the PDSCH generation unit 208 and also to the control information generation unit 209. The control information generation unit 209 generates a signal in the DCI format from the input MCS index together with other control information such as allocation information. Furthermore, CRC (Cyclic Redundancy Check) is generated from the generated data series in the DCI format. In a case where DS is specified by the scheduling type information, the generated CRC is subjected to scrambling using C-RNTI (Cell-Radio Network Temporary Identifier). In a case where SPS is specified by the scheduling type information, the generated CRC is subjected to the scrambling using SPS C-RNTI. The scrambled CRC is added to the DCI format. The signal generated as the DCI format is mapped on PDCCH. Note that the information representing whether the scrambling is performed using C-RNTI or SPS C-RNTI (hereafter this information will be referred to as C-RNTI information) has a one-to-one correspondence to the information on the scheduling type, and thus the information on the scheduling type input and output between blocks described above may be replaced with the C-RNTI information (C-RNTI or SPS C-RNTI).

The PDSCH generation unit 208 performs coding and modulation on information bits to be transmitted to the terminal apparatus 102 using the modulation scheme and the coding rate indicated by the MCS index input from the MCS setting unit 207. The PDSCH generation unit 208 maps the signal to be transmitted to the terminal apparatus 102 to PDSCH according to the allocation information input from the scheduling unit 206. The mapped signal is input to a DL transmission unit 211. In a case where there is RRC information to be notified to the terminal apparatus 102 from the RRC information generation unit 210, this RRC information is input to the PDSCH generation unit 208 and mapped, as a data signal to be transmitted to the terminal apparatus 102, to PDSCH and transmitted. This RRC information is information to be notified via RRC signaling, and includes modulation mode setting as setting information of the modulation mode (the 256-QAM mode and the 64-QAM mode), a serving cell set (a set of a plurality of cells) corresponding to a value of CSI request field, or CSI request setting in terms of a configuration of a particular serving cell.

A DL transmission unit 211 multiplexes signals input from the PDSCH generation unit 208 and the control information generation unit 209, and then performs processing such as an inverse discrete Fourier transform, band-limiting filtering, up-conversion, and the like. A signal output from the DL transmission unit 211 is transmitted to the terminal apparatus 102 via a transmitting antenna 212.

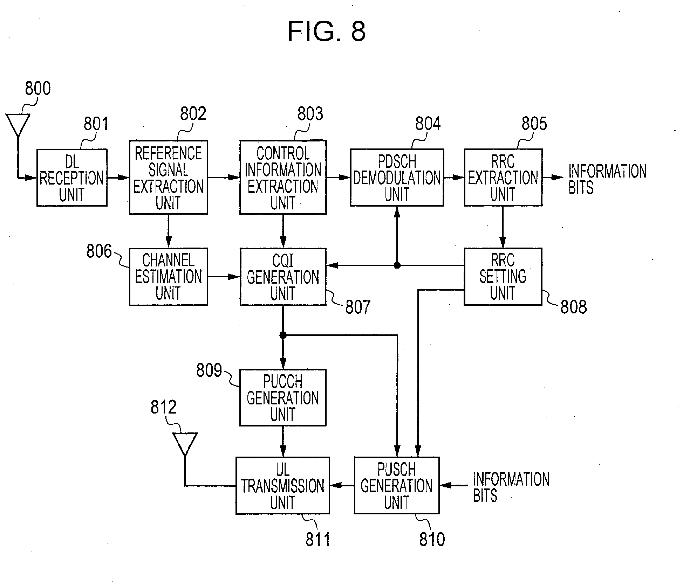

The signal transmitted from the base station apparatus 101 is received by the terminal apparatus 102 via a channel. Fig. 8 illustrates an example of a configuration of the terminal apparatus 102. The signal received by a receiving antenna 800 is input to a DL reception unit 801 and subjected to a process such as a down-conversion, band-limiting filtering, a discrete Fourier transform, and the like. A signal output from the DL reception unit 801 is input to a reference signal extraction unit 802. The reference signal extraction unit 802 extracts a resource in which reference signals transmitted from the base station apparatus 101 are mapped, such as CRS (Cell-specific Reference Signal), CSI-RS (Channel State Information Reference Signal), DMRS (UE-specific Reference Signal, Demodulation Reference Signal) and the like, and the extracted reference signals are input to a channel estimation unit 206. The channel estimation unit 806 estimates a channel state (transmission line state) between the base station apparatus 101 and the terminal apparatus 102 based on the input reception reference signal. An estimated value of the estimated channel state is input to a CQI generation unit 807. Although not shown in Fig. 8, the estimated value of the estimated channel state is also input to a control information extraction unit 803 and a PDSCH demodulation unit 804, and is used in demodulation of the signal mapped on PDCCH or PDSCH.

Signals other than the reference signals extracted by the reference signal extraction unit 802 are input to the control information extraction unit 803. For example, a signal mapped to PDCCH is input to the control information extraction unit 803.

The control information extraction unit 803 extracts a radio resource by which information associated with control information (downlink control information, DCI format) from the received signal was transmitted. The control information extraction unit 803 applies blind decoding to the extracted radio resource. In this process, the terminal apparatus 102 descrambles CRC using C-RNTI and SPS C-RNTI respectively, and regards one that can be descrambled correctly as the transmitted control information. Of the decoded control information, the information associated with the resource allocation (resource allocation information), the information associated with the MCS index of PDSCH, and the information indicating whether the control information is decoded using C-RNTI or SPS C-RNTI (hereinafter this information will be referred as C-RNTI information) are input to a PDSCH demodulation unit 204.

The output from the control information extraction unit 803 is input to a PDSCH demodulation unit 804. For example, a signal mapped to PDSCH is input to the PDSCH demodulation unit 804. The PDSCH demodulation unit 804 demodulates PDSCH using the resource allocation information input from the control information extraction unit 803 and MCS information (the MCS index, information associated with the MCS index). In this process, in a case where the input C-RNTI information indicates that the control information is decoded using C-RNTI, the PDSCH demodulation unit 804 selects an MCS table to be referred based on the modulation mode setting (64-QAM mode, 256-QAM mode) input from the RRC setting unit 808, determines the MCS from the selected MCS table and the notified MCS index, and uses the determined MCS in the demodulation. For example, in a case where the 64-QAM mode is configured, the PDSCH demodulation unit 804 determines the MCS from the MCS index based on the Rel-8 MCS table shown in Fig. 5. In a case where the 256-QAM mode is configured, the PDSCH demodulation unit 804 determines the MCS from the MCS index based on the Rel-12 MCS table shown in Fig. 6. Furthermore, for a subframe (a downlink subframe, subframe set) in which the 64-QAM mode is set, the PDSCH demodulation unit 804 determines the MCS from the MCS index based on the Rel-8 MCS table shown in Fig. 5. For a subframe (downlink subframe, subframe set) in which the 256-QAM mode is set, the PDSCH demodulation unit 804 determines the MCS from the MCS index based on the Rel-12 MCS table shown in Fig. 6. The modulation mode to be set for each subframe is indicated by the RRC setting unit 808.

In the present embodiment, in a case where the information, as the C-RNTI information, input to the PDSCH demodulation unit 804 indicates that the control information is decoded using SPS C-RNTI, the Rel-8 MCS table is selected regardless of the modulation mode setting (64-QAM mode, 256-QAM mode) input from the RRC setting unit 808, the MCS is determined from the notified MCS index, and the determined MCS is used in the demodulation.

In the present embodiment, as described above, the PDSCH demodulation unit 804 switches, according to the input C-RNTI information, whether an MCS table configured by the RRC signaling (an MCS table based on the configured modulation mode) (an MCS table that supports QPSK, 16-QAM, and 64-QAM or an MCS table that supports QPSK, 16-QAM, 64-QAM, and 256-QAM) or a predetermined MCS table (an MCS table that supports QPSK, 16-QAM, and 64-QAM) is used. That is, in a case where the information input as the C-RNTI information indicates that the control information is decoded by SPS C-RNTI, the MCS is determined from the Rel-8 MCS table regardless of the configuration of the RRC signaling (setting of the modulation mode). On the other hand, in a case where the information input as the C-RNTI information indicates that the control information is decoded by C-RNTI, the determination as to whether the Rel-8 MCS table or the Rel-12 MCS table is to be used as the MCS table is performed depending on the configuration of the RRC signaling (the setting of the modulation mode). Thus, in DS, it becomes possible to apply (set) a proper MCS depending on the reception status, while in SPS, it becomes possible to apply (set) an MCS suitable for low-rate data. For the terminal apparatus 102 in a good receiving condition, it is possible to efficiently support 256-QAM transmission in DS, and efficiently support QPSK transmission in SPS. Note that DS and SPS are supported at the same time to the terminal apparatus 102 during communication. For example, PDSCH transmission using DS is performed in a certain subframe, and PDSCH transmission using SPS is performed in another certain subframe. For example, PDSCH transmission using DS is performed using a certain HARQ process, and PDSCH transmission using SPS is performed using another certain HARQ process. For example, service data such as file transfer is transmitted in PDSCH transmission using DS, and VoIP data is transmitted in PDSCH using SPS. According to the embodiment of the present invention, as described above, proper QPSK can be applied in SPS while 256-QAM is allowed to be applied in DS.

The output from the PDSCH demodulation unit 804 is input to an RRC extraction unit 808. In a case where the input signal includes RRC signaling, the RRC extraction unit 808 extracts the RRC signaling and outputs the extracted RRC signaling to the RRC setting unit 808. The RRC setting unit 808 controls each processing unit of the terminal apparatus 102 by using control information transmitted from the base station apparatus 101 by RRC signaling. That is, the RRC setting unit 808 performs a process to set a control parameter. For example, based on the modulation mode setting notified via the RRC signaling, the RRC setting unit 808 determines a subframe (a subframe set) to which the 64-QAM mode is to be applied, and a subframe (a subframe set) to which the 256-QAM mode is to be applied.

The CQI generation unit 807 generates information associated with CQI (for example, a CQI index) using the channel estimation value input from the channel estimation unit 806 and the modulation mode setting (setting of the 64-QAM mode or the 256-QAM mode) input from the RRC setting unit 808. Herein, CQI includes wideband CQI which is CQI of the whole system band, and subband CQI which is CQI of each of subbands into which the system band is divided. Based on the input modulation mode setting, the CQI generation unit 807 selects a CQI table to be used in generating a CQI index. Based on the input channel estimation value, the CQI generation unit 807 selects one of CQI indexes of a certain CQI table. For a subframe (a downlink subframe, a subframe set, a downlink subframe set) which the 64-QAM mode is configured, the CQI generation unit 807 quantizes the channel quality obtained from the channel estimation value based on the Rel-8 CQI table shown in Fig. 3, and selects a CQI index that allows it to achieve a particular error rate. The selected CQI index is input to a PUCCH generation unit 809 or a PUSCH generation unit 810. For a subframe (a downlink subframe, a subframe set, a downlink subframe set) which the 256-QAM mode is configured, the CQI generation unit 807 quantizes the channel quality obtained from the channel estimation value based on the Rel-12 CQI table shown in Fig. 4, and selects a CQI index that allows it to achieve a particular error rate. The selected CQI index is input to the PUCCH generation unit 809 or the PUSCH generation unit 810. Notifying of the CSI may be performed by a periodic method or a non-periodic method. To perform periodic CSI (Periodic CSI, P-CSI) transmission, PUCCH, or PUSCH is used. To perform non-periodic CSI transmission, PUSCH is used.

### Second Embodiment

In the first embodiment, the MCS table is changed based on the C-RNTI information and the modulation mode setting, and if control information is correctly decoded using SPS C-RNTI, then the Rel-8 MCS table is selected. However, to set SPS, it is necessary to set the MSB of the MCS to '0', which makes it impossible to perform transmission using 64-QAM. To use 64-QAM without changing the requirement that the MSB is should be set to '0', it is necessary to use the Rel-12 MCS table even in SPS. The present embodiment discloses a technique to use the Rel-12 MCS table even in SPS.

To use the Rel-12 MCS table also in SPS, instead of changing the MCS table according to the C-RNTI information, the modulation mode (the 64-QAM mode or the 256-QAM mode) is set via the RRC signaling, and the modulation mode is employed not only in the dynamic scheduling (DS) but also in SPS. Alternatively, instead of always using the MCS table of the modulation mode, for example, when the SPS period set via the RRC signaling is longer than a predetermined threshold value, the Rel-8 MCS table (the MCS table of the 64-QAM mode) may be selected regardless of the modulation mode.

That is, in the base station apparatus 101, when the repetition period of SPS input to the MCS setting unit from the RRC extraction unit is longer than a particular value, the MCS setting unit 207 determines an MCS index using the Rel-8 MCS table, but when the repetition period of SPS is shorter than a predetermined value, the MCS setting unit 207 sets the MCS table based on information input from the RRC extraction unit 205 and determines an MCS index.

By selecting the MCS table referred to in determining the MCS index depending on the information given via the RRC signaling as described above, it becomes possible to change the modulation mode without issuing RRC signaling to notify of the change in the modulation mode.

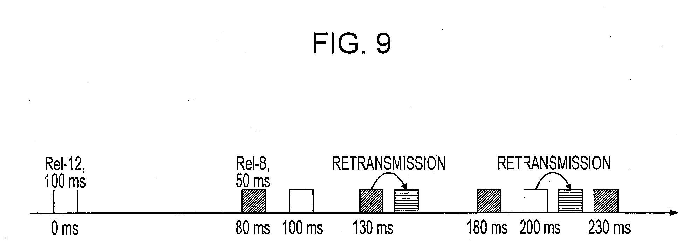

Next, a description is given below for a case in which transmission using SPS is performed again. Let it be assumed that a result of scheduling in SPS is as shown in Fig. 9. First, as shown in Fig. 9, let it be assumed that the Rel-12 MCS table has been set via RRC signaling, and SPS is performed every 100 ms. Hereinafter SPS at intervals of 100 ms will be referred to as SPS1. In Fig. 9, thereafter (at least within a period of 80 ms after the first SPS), the Rel-8 MCS table is set via RRC signaling, and SPS is newly performed. In the SPS performed newly, SPS is performed every 50 ms according to the Rel-8 MCS table. Hereinafter, this SPS performed every 50 ms will be referred to as SPS2.

Herein, in a case where an error occurs in data transmitted in SPS1 and SPS2, the terminal apparatus 102 transmits NACK to the base station apparatus 101, and the base station apparatus 101 retransmits the data. In this process, it is necessary to properly determine which MCS table should be used. In the present embodiment, the MCS table used in retransmission in SPS is determined as described below.

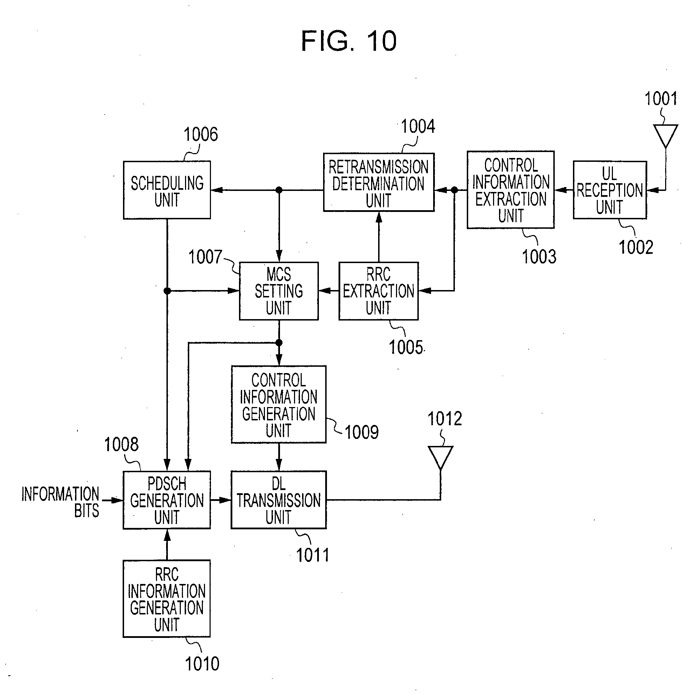

A configuration of the base station apparatus 101 according to the present embodiment is described below with reference to Fig. 10. Fig. 10 is different from Fig. 2 according to the first embodiment in that a retransmission determination unit 1004 is provided. Note that although the CQI extraction unit is not shown in Fig. 10, the CQI extraction unit is provided as in the first embodiment such that when CQI is notified from the terminal apparatus 102 the CQI extraction unit extracts the CQI and inputs it to the MCS setting unit 1007 and the scheduling unit 1006.

First, control information such as an ACK signal, a NACK signal, or the like transmitted from the terminal apparatus 102 is extracted by a control information extraction unit 1003 and input to the retransmission determination unit 1004 or the like. The retransmission determination unit 1004 extracts the ACK signal or the NACK signal and determines whether it is necessary to perform retransmission. In a case where it is determined that it is not necessary to perform retransmission, information indicating that first transmission is to be performed is input to the scheduling unit 1006 and the MCS setting unit 1007. The MCS setting unit 1007 determines the MCS to be used in transmission in next SPS. The MCS table used here is set according to information input from the RRC setting unit 1005. However, as in the first embodiment, instead of using RRC signaling, the MCS table to be used may be set depending on whether DS or SPS is used in the scheduling.

Next, a description is given below for a case where a NACK signal is notified from the terminal apparatus 102. In this case, control information including the NACK signal is extracted by the control information extraction unit 1003 and is input to the retransmission determination unit 1004 or the like. The retransmission determination unit 1004 extracts the NACK signal and thus the retransmission determination unit 1004 determines that it is necessary to perform retransmission. Information indicating that retransmission is to be performed is input to the scheduling unit 1006 and the MCS setting unit 1007. The scheduling unit allocates a resource other than the resource set in SPS (at intervals of 100 ms shown in Fig. 9) for use in the retransmission. The MCS setting unit 1007 sets the MCS for the retransmission. In this process, SPS is set according to the Rel-12 MCS table as with SPS1. Thereafter, if the Rel-8 MCS table is set via the RRC signaling, not the MCS table set as of when the retransmission is performed but the MCS table used when SPS1 is set is stored, and this MCS table is used.

On the other hand, in a case where the scheduling type is DS, first transmission or retransmission is performed according to the MCS table set via the RRC signaling.

As described above, in the case where the scheduling type is DS, the MCS setting unit 1007 determines the MCS index according to the MCS table set via RRC signaling. On the other hand, in a case where scheduling type is SPS, the MCS setting unit 1007 does not use the MCS table set via RRC signaling when first transmission or retransmission is performed, but the MCS setting unit 1007 stores the MCS table as of when SPS is set, and uses the stored MCS table in retransmission. This prevents a situation in which an MCS table different from that used in the first transmission is used in retransmission, that is, retransmission cannot be performed using the same MCS as that used in the first transmission and thus receiving mixing processing is impossible. That is, it is possible to perform retransmission in an efficient manner.

Note that CRC in the DCI format for the first transmission and the retransmission of DS is scrambled using C-RNTI, while CRC in the DCI format for the first transmission and the retransmission of SPS is scrambled using not C-RNTI but SPS C-RNTI and transmitted to the terminal apparatus 102.

Next, a configuration of the terminal apparatus 102 according to the present embodiment is described. The basic configuration is the same as that shown in Fig. 8, but there is a difference in the process performed by the PDSCH demodulation unit 804 as described below.

As in the first embodiment, the control information extraction unit 803 inputs, to the PDSCH demodulation unit 804, C-RNTI information indicating whether control information is decoded using C-RNTI or SPS C-RNTI.

In a case where the control information is decoded by blind decoding using C-RNTI, the received data is such data that was transmitted using DS, and thus in the PDSCH demodulation unit 804, the MCS table set via RRC signaling is input from the RRC setting unit, and the MCS is determined using the notified MCS index. On the other hand, in a case where the control information is decoded by blind decoding using SPS C-RNTI, the received data is such data that was transmitted by SPS, and thus no information associated with the MCS table is input from the RRC setting unit 808. In this case, the MCS is determined based on the MCS table as of when the SPS was set and the notified MCS index. The obtained MCS is input to the PDSCH demodulation unit 804.

As described above, the terminal apparatus 102 determines, from the C-RNTI information, the MCS table to be used in the demodulation. In a case where decoding is performed using C-RNTI, the MCS is determined based on the MCS table notified via RRC signaling. On the other hand, the MCS table to be used in the demodulation is determined based on the SPS C-RNTI information. In a case where the decoding is performed using SPS C-RNTI, the MCS is determined not based on the MCS table notified via RRC signaling but based on the MCS table as of when the SPS was set. As a result, in SPS, it becomes possible to use the same MCS in retransmission as that used in the first transmission, which results in an increase in retransmission effect and an increase in throughput.

A program running on a base station and a terminal according to the present invention is a program that controls a CPU or the like (a program that causes a computer to function) so as to realize functions according to the embodiments of the invention. Information treated by these apparatuses is temporarily stored in a RAM in processing. Thereafter, the information is stored in various ROMS or an HDD, and is read out by the CPU and changed and rewritten as required. As for a storage medium for storing the program, any of the following may be used: a semiconductor medium (for example, a ROM, a nonvolatile memory card, or the like), an optical storage medium (for example, DVD, MO, MD, CD, BD or the like), a magnetic storage medium (for example, a magnetic tape, a flexible disk, or the like), or the like. The functions of the embodiments described above may be realized not only by executing the loaded program but the functions of the present invention may also be realized by performing processing according to instructions of the program in cooperation with an operating system or another applications program or the like.

To distribute the program in a market, the program may be stored in a portable-type storage medium, or the program may be transferred to a server computer connected via a network such as the Internet. In this case, a storage apparatus of the server computer falls within the scope of the present invention. Furthermore, part or all of the base station and the terminal according to the embodiment described above may be realized typically using an integrated circuit such as an LSI. Each functional block of the base station and the terminal may be individually realized on a chip, or part or all of them may be integrated on a chip. The integration method is not limited to the LSI, but a dedicated circuit or a general-purpose processor may be employed to realize the functions. In a case where each functional block is implemented in the form of an integrated circuit, an integrated circuit control unit for controlling them is added.

The integration method is not limited to the LSI, but a general-purpose processor may be employed. When an integrated circuit technique replacing the LSI is available as a result of advance in semiconductor technology, an integrated circuit based on such a technique may be employed.

Note that the present invention is not limited to the embodiments described above. The terminal according to the present invention is not limited to the mobile station apparatus, but may be applied to a stationary or non-mobile electronic device installed outdoors, such as an AV device, a kitchen apparatus, a cleaning/washing apparatus, an air conditioning apparatus, an office apparatus, a vending machine, or other home appliances.

Information and signals may be represented using various different techniques and methods. For example, chips, symbols, bits, signals, information, commands, instructions, and data, which may be referred to via the description given above, may be represented by voltages, currents, electromagnetic waves, magnetic fields or magnetic particles, optical fields or optical particles, or a combination thereof.

Various logical blocks, processing unit, and algorithm steps, described above by way of example associated with the disclosure of the present description may be implemented by electric hardware, computer software, or a combination thereof. To clearly show the equivalency between hardware and software, various examples of elements, blocks, modules, circuits, and steps have been described above generally in terms of their functionalities. Whether a functionality is implemented by hardware or software depends on individual applications and design restrictions imposed on the whole system. Those skilled in the art may implement the functionalities described above in many ways in specific applications. It should be understood that any of such implementations falls within the scope of the disclosure.

Various logical blocks and processing unit described by way of example associated with the disclosure of the present description may be implemented or executed by a general-purpose processor, a digital signal processor (DSP), an application-specific integrated circuit (ASIC), a field programmable gate array signal (FPGA), or other programmable logic devices, a discrete gate or a transistor logic, or a discrete hardware component, which are designed to execute the functions described above, or a combination thereof. The general-purpose processor may be a microprocessor. Alternatively, the processor may be a conventional processor, a controller, a microcontroller, or a state machine. The processor may be implemented in the form of a combination of computing devices. For example, a combination of a DSP and a microprocessor, a combination of a plurality of microprocessors, a combination of a DSP core and one or more microprocessors, or any similar combination.

Methods or algorithm steps associated with the disclosure described above may be directly embodied by software executed by hardware or a processor and a combination thereof. The software module may be disposed in a RAM memory, a flash memory, a ROM memory, an EPROM memory, an EEPROM memory, a register, a hard disk, a removable disk, a CD-ROM, or a storage medium in any form known in this field. A typical storage medium may be coupled to a processor such that the processor is capable of reading out information from the storage medium and writing information on the storage medium. In an alternative method, the -storage medium may be integrated with the processor. The processor and the storage medium may be disposed within an ASIC. The ASIC may be located within the terminal apparatus (user terminal). Alternatively, the processor and the storage medium may be disposed as discrete elements within the terminal apparatus 5.

In one or more typical designs, the functions described above may be implemented by hardware, software, firmware, or a combination thereof. If the functions are implemented by software, the functions may be stored as one or more commands or codes on a computer-readable medium, or may be transmitted. The computer-readable medium may include both a communication medium including a medium that assists transporting of a computer program from a certain place to another place, and a computer storage medium. The storage medium may be any medium that is available in markets and that can be accessed by a general-purpose or specific-purpose computer. The computer-readable storage medium may be, by way of example but not limitation, a RAM, a ROM, an EEPROM, a CDROM or other optical disk media, a magnetic disk medium or other magnetic storage media, or a medium that can be accessed by a general-purpose or specific-purpose computer or a general-purpose or specific-purpose processor and that can be used to carry or store program code in the form of a command or a data structure. Furthermore, any connection may be called a proper computer-readable medium. For example, in a case where software is transmitted from a web site, a server, or other remote sources via a coaxial cable, an optical fiber cable, a twisted pair wire, a digital subscriber line (DSL), or a radio technique using an infrared ray, a radio wave, or a microwave, then the coaxial cable, the optical fiber cable, the twisted pair wire, the DSL, and the radio technique such as the infrared ray, the radio wave, or the microwave fall within the scope of the definition of the medium. Disks or discs used in the present description include a compact disc (CD), a laser disc (registered trademark), an optical disc, a digital versatile disc (DVD), a floppy (registered trademark) disk, and a bluray disc, wherein, in general, disks magnetically reproduce data, while discs reproduce data optically using a laser. It should be understood that a combination of media described above falls within a scope of computer-readable medium.

The embodiments of the present invention have been described above in detail with reference to the drawings. Note that detailed configurations are not limited to these embodiments, but changes in design are possible without departing from the scope of the invention. Note that many changes are possible within the scope of the invention as defined in claims. Technical means disclosed in different embodiments may be properly combined, and resultant embodiments also fall within the technical scope of the invention. Note that among elements described in embodiments, elements that are similar in effects may be exchanged, and resultant embodiments also fall within the scope of the invention.

### Industrial Applicability

The present invention may be suitably applied to a radio base station, a radio terminal, a wireless communication system, and a radio communication method.

### Reference Signs List

- 101: base station apparatus
- 102: terminal apparatus
- 201: receiving antenna
- 202: UL reception unit
- 203: control information extraction unit
- 204: CQI extraction unit
- 205: RRC extraction unit
- 206: scheduling unit
- 207: MCS setting unit
- 208: PDSCH generation unit
- 209: control information generation unit
- 210: RRC generation unit
- 211: DL transmission unit
- 212: transmitting antenna
- 800: receiving antenna
- 801: DL reception unit
- 802: reference signal extraction unit
- 803: control information extraction unit
- 804: PDSCH demodulation unit
- 805: RRC extraction unit
- 806: channel estimation unit
- 807: CQI generation unit
- 808: RRC setting unit
- 809: PUCCH generation unit
- 810: PUSCH generation unit
- 811: UL transmission unit
- 812: transmitting antenna
- 1001: receiving antenna
- 1002: UL reception unit
- 1003: control information extraction unit
- 1004: CQI extraction unit
- 1005: RRC extraction unit
- 1006: scheduling unit
- 1007: MCS setting unit
- 1008: PDSCH generation unit
- 1009: control information generation unit
- 1010: RRC generation unit
- 1011: DL transmission unit
- 1012: transmitting antenna

## Claims

1. A terminal apparatus configured to communicate with a base station apparatus, in a long term evolution, LTE, system, the terminal apparatus comprising:
a DL reception unit configured to receive, from the base station apparatus, RRC signaling, a physical downlink control channel, PDCCH, and a physical downlink shared channel, PDSCH,
a PDSCH demodulation unit configured to determine, based on the RRC signaling, whether a first modulation and coding scheme, MCS, table or a second MCS table is to be used,
a channel quality indicator, CQI, generation unit configured to determine, based on the RRC signaling, whether a first CQI table or a second CQI table is to be used,
the first CQI table and the second CQI table each include a CQI index, a modulation method, and a coding rate,
the modulation method included in the first CQI table includes information associated with QPSK, 16-QAM, and 64-QAM, and
the modulation method included in the second CQI table includes information associated with QPSK, 16-QAM, 64-QAM, and 256-QAM,
the first MCS table and the second MCS table each include an MCS index, a modulation method, and a transport block size, TBS, index,
the modulation method included in the first MCS table includes information associated with QPSK, 16-QAM, and 64-QAM, and
the modulation method included in the second MCS table includes information associated with QPSK, 16-QAM, 64-QAM, and 256-QAM,
wherein the PDSCH demodulation unit uses the first MCS table or the second MCS table based on the RRC signaling, in a case where it is detected that the PDSCH is scheduled by the PDCCH using cyclic redundancy check, CRC, scrambled by cell radio network temporary identifier, C-RNTI,
the PDSCH demodulation unit uses the first MCS table even if it is determined to use the second MCS table based on the RRC signaling, in a case where it is detected that the PDSCH is scheduled by the PDCCH using CRC scrambled by semi-persistent scheduling cell radio network temporary identifier, SPS C-RNTI,
the CQI generation unit uses the second CQI table, in a case where it is determined to use the second CQI table based on the RRC signaling.

2. The terminal apparatus according to claim 1, wherein
the CQI generation unit uses the first CQI table for a certain subframe set determined to use the first CQI table, and uses the second CQI table for another certain subframe set determined to use the second CQI table.

3. A method executed by a terminal apparatus that communicate with a base station apparatus, in an LTE system, the method comprising:
a step of receiving, from the base station apparatus, RRC signaling, a PDCCH and a PDSCH,
a step of determining, based on the RRC signaling, whether a first MCS table or a second MCS table is to be used,
a step of determining, based on the RRC signaling, whether a first CQI table or a second CQI table is to be used,
the first CQI table and the second CQI table each include a CQI index, a modulation method, and a coding rate,
the modulation method included in the first CQI table includes information associated with QPSK, 16-QAM, and 64-QAM, and
the modulation method included in the second CQI table includes information associated with QPSK, 16-QAM, 64-QAM, and 256-QAM,
the first MCS table and the second MCS table each include an MCS index, a modulation method, and a TBS index,
the modulation method included in the first MCS table includes information associated with QPSK, 16-QAM, and 64-QAM, and
the modulation method included in the second MCS table includes information associated with QPSK, 16-QAM, 64-QAM, and 256-QAM,
wherein the step of determining the MCS table determines to use the first MCS table or the second MCS table based on the RRC signaling, in a case where it is detected that the PDSCH is scheduled by the PDCCH using CRC scrambled by C-RNTI,
the step of determining the MCS table determines to use the first MCS table even if it is determined to use the second MCS table based on the RRC signaling, in a case where it is detected that the PDSCH is scheduled by the PDCCH using CRC scrambled by SPS C-RNTI,
the step of determining the CQI table determines to use the second CQI table, in a case where it is determined to use the second CQI table based on the RRC signaling.

4. The method according to claim 3, wherein
the step of determining the CQI table determines to use the first CQI table for a certain subframe set, and determines to use the second CQI table for another certain subframe set.

5. A base station apparatus configured to communicate with a terminal apparatus, in an LTE system, the base station apparatus comprising:
a DL transmission unit configured to transmit, to the terminal apparatus, RRC signaling, a PDCCH and a PDSCH,
an MCS setting unit configured to determine, based on the RRC signaling, whether a first MCS table or a second MCS table is to be used,
a CQI extraction unit configured to determine, based on the RRC signaling, whether a first CQI table or a second CQI table is to be used,
the first CQI table and the second CQI table each include a CQI index, a modulation method, and a coding rate,
the modulation method included in the first CQI table includes information associated with QPSK, 16-QAM, and 64-QAM, and
the modulation method included in the second CQI table includes information associated with QPSK, 16-QAM, 64-QAM, and 256-QAM,
the first MCS table and the second MCS table each include an MCS index, a modulation method, and a TBS index,
the modulation method included in the first MCS table includes information associated with QPSK, 16-QAM, and 64-QAM, and
the modulation method included in the second MCS table includes information associated with QPSK, 16-QAM, 64-QAM, and 256-QAM,
wherein the MCS setting unit uses the first MCS table or the second MCS table based on the RRC signaling, in a case where the PDSCH is to be scheduled by the PDCCH including CRC scrambled by C-RNTI,
the MCS setting unit uses the first MCS table even if it is determined to use the second MCS table based on the RRC signaling, in a case where the PDSCH is to be scheduled by the PDCCH including CRC scrambled by SPS C-RNTI,
the CQI extraction unit uses the second CQI table, in a case where it is determined to use the second CQI table based on the RRC signaling.

6. The base station apparatus according to claim 5, wherein
the CQI extraction unit uses the first CQI table for a certain subframe set determined to use the first CQI table, and uses the second CQI table for another certain subframe set determined to use the second CQI table.

7. A method executed by a base station apparatus that communicates with a terminal apparatus, in an LTE system, the method comprising:
a step of transmiting, to the terminal apparatus, RRC signaling, a PDCCH and a PDSCH,
a step of determining, based on the RRC signaling, whether a first MCS table or a second MCS table is to be used,
a step of determining, based on the RRC signaling, whether a first CQI table or a second CQI table is to be used,
the first CQI table and the second CQI table each include a CQI index, a modulation method, and a coding rate,
the modulation method included in the first CQI table includes information associated with QPSK, 16-QAM, and 64-QAM, and
the modulation method included in the second CQI table includes information associated with QPSK, 16-QAM, 64-QAM, and 256-QAM,
the first MCS table and the second MCS table each include an MCS index, a modulation method, and a TBS index,
the modulation method included in the first MCS table includes information associated with QPSK, 16-QAM, and 64-QAM, and
the modulation method included in the second MCS table includes information associated with QPSK, 16-QAM, 64-QAM, and 256-QAM,
wherein the step of determining the MCS table determines to use the first MCS table or the second MCS table based on the RRC signaling, in a case where the PDSCH is to be scheduled by the PDCCH including CRC scrambled by C-RNTI,
the step of determining the MCS table determines to use he first MCS table even if it is determined to use the second MCS table based on the RRC signaling, in a case where the PDSCH is to be scheduled by the PDCCH including CRC scrambled by SPS C-RNTI,
the step of determining the CQI table determines to use the second CQI table, in a case where it is determined to use the second CQI table based on the RRC signaling.

8. The method according to claim 7, wherein
the step of determining the CQI table determines to use the first CQI table for a certain subframe set, and determines to use the second CQI table for another certain subframe set.

## Patentansprüche

1. Endgerätvorrichtung, die konfiguriert ist, mit einer Basisstationsvorrichtung in einem Long Term Evolution,LTE,-System zu kommunizieren, wobei die Endgerätvorrichtung umfasst:
eine DL-Empfangseinheit, die konfiguriert ist, von der Basisstationsvorrichtung RRC-Signalisierung, einen Physical Downlink Control Channel bzw. physikalischen Downlink-Steuerkanal, PDCCH, und einen Physical Downlink Shared Channel bzw. physikalischen gemeinsam genutzten Downlink-Kanal, PDSCH, zu empfangen,
eine PDSCH-Demodulationseinheit, die konfiguriert ist, basierend auf der RRC-Signalisierung zu bestimmen, ob eine erste Modulations- und Codie-rungsschema,MCS,-Tabelle oder eine zweite MCS-Tabelle zu verwenden ist;
einen Kanalqualitätsindikator,CQI,-Generierungseinheit, die konfiguriert ist, basierend auf der RRC-Signalisierung zu bestimmen, ob eine erste CQI-Tabelle oder eine zweite CQI-Tabelle zu verwenden ist;
wobei die erste CQI-Tabelle und die zweite CQI-Tabelle jeweils einen CQI-Index, ein Modulationsverfahren und eine Codierungsrate enthalten,
wobei das in der ersten CQI-Tabelle enthaltene Modulationsverfahren Informationen enthält, die mit QPSK, 16-QAM und 64-QAM verknüpft sind, und
wobei das in der zweiten CQI-Tabelle enthaltene Modulationsverfahren Informationen enthält, die mit QPSK, 16-QAM, 64-QAM und 256-QAM verknüpft sind,
wobei die erste MCS-Tabelle und die zweite MCS-Tabelle jeweils einen MCS-Index, ein Modulationsverfahren und einen Transport Block Size,TBS,-Index enthalten,
wobei das in der ersten MCS-Tabelle enthaltene Modulationsverfahren Informationen enthält, die mit QPSK, 16-QAM und 64-QAM verknüpft sind, und
wobei das in der zweiten MCS-Tabelle enthaltene Modulationsverfahren Informationen enthält, die mit QPSK, 16-QAM, 64-QAM und 256-QAM verknüpft sind,
wobei die PDSCH-Demodulationseinheit die erste MCS-Tabelle oder die zweite MCS-Tabelle basierend auf der RRC-Signalisierung in einem Fall verwendet, in dem detektiert wird, dass der PDSCH von dem PDCCH unter Verwendung von Cyclic Redundancy Check, CRC, geplant bzw. terminiert wird, und zwar verschlüsselt durch Cell Radio Network Temporary Identifier, C-RNTI,
wobei die PDSCH-Demodulationseinheit die erste MCS-Tabelle verwendet, selbst wenn basierend auf der RRC-Signalisierung bestimmt wird, die zweite MCS-Tabelle zu verwenden, und zwar in einem Fall, in dem detektiert wird, dass der PDSCH von dem PDCCH unter Verwendung von CRC geplant bzw. terminiert wird, und zwar verschlüsselt durch Semi-Persistent Scheduling Cell Radio Network Temporary Identifier, SPS C-RNTI,
wobei die CQI-Generierungseinheit die zweite CQI-Tabelle in einem Fall verwendet, in dem basierend auf der RRC-Signalisierung bestimmt wird, die zweite CQI-Tabelle zu verwenden.

2. Endgerätvorrichtung nach Anspruch 1, wobei
die CQI-Generierungseinheit die erste CQI-Tabelle für einen bestimmten Subframesatz verwendet, der zum Verwenden der ersten CQI-Tabelle bestimmt ist, und die zweite CQI-Tabelle für einen anderen bestimmten Subframesatz verwendet, der zum Verwenden der zweiten CQI-Tabelle bestimmt ist.

3. Verfahren, das von einer Endgerätvorrichtung ausgeführt wird, die mit einer Basisstationsvorrichtung in einem LTE-System kommuniziert, wobei das Verfahren umfasst:
einen Schritt des Empfangens, von der Basisstationsvorrichtung, einer RRC-Signalisierung, eines PDCCH und eines PDSCH,
einen Schritt des Bestimmens, basierend auf der RRC-Signalisierung, ob eine erste MCS-Tabelle oder eine zweite MCS-Tabelle zu verwenden ist,
einen Schritt des Bestimmens, basierend auf der RRC-Signalisierung, ob eine erste CQI-Tabelle oder eine zweite CQI-Tabelle zu verwenden ist,
wobei die erste CQI-Tabelle und die zweite CQI-Tabelle jeweils einen CQI-Index, ein Modulationsverfahren und eine Codierungsrate enthalten,
wobei das in der ersten CQI-Tabelle enthaltene Modulationsverfahren Informationen enthält, die mit QPSK, 16-QAM und 64-QAM verknüpft sind, und
wobei das in der zweiten CQI-Tabelle enthaltene Modulationsverfahren Informationen enthält, die mit QPSK, 16-QAM, 64-QAM und 256-QAM verknüpft sind,
wobei die erste MCS-Tabelle und die zweite MCS-Tabelle jeweils einen MCS-Index, ein Modulationsverfahren und einen Transport Block Size,TBS,-Index enthalten,
wobei das in der ersten MCS-Tabelle enthaltene Modulationsverfahren Informationen enthält, die mit QPSK, 16-QAM und 64-QAM verknüpft sind, und
wobei das in der zweiten MCS-Tabelle enthaltene Modulationsverfahren Informationen enthält, die mit QPSK, 16-QAM, 64-QAM und 256-QAM verknüpft sind,
wobei der Schritt des Bestimmens der MCS-Tabelle bestimmt, die erste MCS-Tabelle oder die zweite MCS-Tabelle zu verwenden, und zwar basierend auf der RRC-Signalisierung, in einem Fall, in dem detektiert wird, dass der PDSCH von dem PDCCH unter Verwendung von CRC geplant bzw. terminiert wird, und zwar verschlüsselt durch C-RNTI,
wobei der Schritt des Bestimmens der MCS-Tabelle bestimmt, die erste MCS-Tabelle zu verwenden, selbst wenn basierend auf der RRC-Signalisierung bestimmt wird, die zweite MCS-Tabelle zu verwenden, in einem Fall, in dem detektiert wird, dass der PDSCH von dem PDCCH unter Verwendung von CRC geplant bzw. terminiert wird, und zwar verschlüsselt durch SPS C-RNTI,
wobei der Schritt des Bestimmens der CQI-Tabelle bestimmt, die zweite CQI-Tabelle zu verwenden, und zwar in einem Fall, in dem basierend auf der RRC-Signalisierung bestimmt wird, die zweite CQI-Tabelle zu verwenden.

4. Verfahren nach Anspruch 3, wobei
der Schritt des Bestimmens der CQI-Tabelle bestimmt, die erste CQI-Tabelle für einen bestimmten Subframesatz zu verwenden, und bestimmt, die zweite CQI-Tabelle für einen anderen bestimmten Subframesatz zu verwenden.

5. Basisstationsvorrichtung, die konfiguriert ist, mit einer Endgerätvorrichtung in einem LTE-System zu kommunizieren, wobei die Basisstationsvorrichtung umfasst:
eine DL-Übertragungseinheit, die konfiguriert ist, eine RRC-Signalisierung, einen PDCCH und einen PDSCH an die Endgerätvorrichtung zu übertragen,
eine MCS-Festlegungseinheit, die konfiguriert ist, basierend auf der RRC-Signalisierung zu bestimmen, ob eine erste MCS-Tabelle oder eine zweite MCS-Tabelle zu verwenden ist;
eine CQI-Extraktionseinheit, die konfiguriert ist, basierend auf der RRC-Signalisierung zu bestimmen, ob eine erste CQI-Tabelle oder eine zweite CQI-Tabelle zu verwenden ist;
wobei die erste CQI-Tabelle und die zweite CQI-Tabelle jeweils einen CQI-Index, ein Modulationsverfahren und eine Codierungsrate enthalten,
wobei das in der ersten CQI-Tabelle enthaltene Modulationsverfahren lnformationen enthält, die mit QPSK, 16-QAM und 64-QAM verknüpft sind, und
wobei das in der zweiten CQI-Tabelle enthaltene Modulationsverfahren Informationen enthält, die mit QPSK, 16-QAM, 64-QAM und 256-QAM verknüpft sind,
wobei die erste MCS-Tabelle und die zweite MCS-Tabelle jeweils einen MCS-Index, ein Modulationsverfahren und einen Transport Block Size,TBS,-Index enthalten,
wobei das in der ersten MCS-Tabelle enthaltene Modulationsverfahren lnf0r-mationen enthält, die mit QPSK, 16-QAM und 64-QAM verknüpft sind, und
wobei das in der zweiten MCS-Tabelle enthaltene Modulationsverfahren Informationen enthält, die mit QPSK, 16-QAM, 64-QAM und 256-QAM verknüpft sind,
wobei die MCS-Festlegungseinheit die erste MCS-Tabelle oder die zweite MCS-Tabelle basierend auf der RRC-Signalisierung verwendet, und zwar in einem Fall, in dem der PDSCH von dem PDCCH einschließlich CRC verschlüsselt durch C-RNTI geplant bzw. terminiert werden soll;
wobei MCS-Festlegungseinheit die erste MCS-Tabelle verwendet, selbst wenn basierend auf der RRC-Signalisierung bestimmt wird, die zweite MCS-Tabelle zu verwenden, und zwar in einem Fall, in dem der PDSCH von dem PDCCH einschließlich CRC verschlüsselt durch SPS C-RNTI geplant bzw. terminiert werden soll;
wobei die CQI-Extraktionseinheit die zweite CQI-Tabelle in einem Fall verwendet, in dem basierend auf der RRC-Signalisierung bestimmt wird, die zweite CQI-Tabelle zu verwenden.

6. Basisstationsvorrichtung nach Anspruch 5, wobei
die CQI-Extraktionseinheit die erste CQI-Tabelle für einen bestimmten Subframesatz verwendet, der zum Verwenden der ersten CQI-Tabelle bestimmt ist, und die zweite CQI-Tabelle für einen anderen bestimmten Subframesatz verwendet, der zum Verwenden der zweiten CQI-Tabelle bestimmt ist.

7. Verfahren, das von einer Basisstationsvorrichtung ausgeführt wird, die mit einer Endgerätvorrichtung in einem LTE-System kommuniziert, wobei das Verfahren umfasst:
einen Schritt des Übertragens einer RRC-Signalisierung, eines PDCCH und eines PDSCH an die Endgerätvorrichtung,
ein Schritt des Bestimmens, basierend auf der RRC-Signalisierung, ob eine erste MCS-Tabelle oder eine zweite MCS-Tabelle zu verwenden ist,
ein Schritt des Bestimmens, basierend auf der RRC-Signalisierung, ob eine erste CQI-Tabelle oder eine zweite CQI-Tabelle zu verwenden ist,
wobei die erste CQI-Tabelle und die zweite CQI-Tabelle jeweils einen CQI-Index, ein Modulationsverfahren und eine Codierungsrate enthalten,
wobei das in der ersten CQI-Tabelle enthaltene Modulationsverfahren Informationen enthält, die mit QPSK, 16-QAM und 64-QAM verknüpft sind, und
wobei das in der zweiten CQI-Tabelle enthaltene Modulationsverfahren Informationen enthält, die mit QPSK, 16-QAM, 64-QAM und 256-QAM verknüpft sind,
wobei die erste MCS-Tabelle und die zweite MCS-Tabelle jeweils einen MCS-Index, ein Modulationsverfahren und einen Transport Block Size,TBS,-Index enthalten,
wobei das in der ersten MCS-Tabelle enthaltene Modulationsverfahren Informationen enthält, die mit QPSK, 16-QAM und 64-QAM verknüpft sind, und
wobei das in der zweiten MCS-Tabelle enthaltene Modulationsverfahren Informationen enthält, die mit QPSK, 16-QAM, 64-QAM und 256-QAM verknüpft sind,
wobei der Schritt des Bestimmens der MCS-Tabelle bestimmt, die erste MCS-Tabelle oder die zweite MCS-Tabelle zu verwenden, und zwar basierend auf der RRC-Signalisierung, in einem Fall, in dem der PDSCH von dem PDCCH einschließlich CRC verschlüsselt durch C-RNTI geplant bzw. terminiert werden soll,
wobei der Schritt des Bestimmens der MCS-Tabelle bestimmt, die erste MCS-Tabelle zu verwenden, selbst wenn basierend auf der RRC-Signalisierung bestimmt wird, die zweite MCS-Tabelle zu verwenden, in einem Fall, in dem der PDSCH von dem PDCCH einschließlich CRC verschlüsselt durch SPS C-RNTI geplant bzw. terminiert werden soll;
wobei der Schritt des Bestimmens der CQI-Tabelle bestimmt, die zweite CQI-Tabelle zu verwenden, und zwar in einem Fall, in dem basierend auf der RRC-Signalisierung bestimmt wird, die zweite CQI-Tabelle zu verwenden.

8. Verfahren nach Anspruch 7, wobei
der Schritt des Bestimmens der CQI-Tabelle bestimmt, die erste CQI-Tabelle für einen bestimmten Subframesatz zu verwenden, und bestimmt, die zweite CQI-Tabelle für einen anderen bestimmten Subframesatz zu verwenden.

## Revendications

1. Appareil de terminal configuré pour communiquer avec un appareil de station de base, dans un système à technologie d'évolution à long terme, LTE, l'appareil de terminal comprenant :
un module de réception DL configuré pour recevoir, de l'appareil de station de base, une signalisation RRC, un canal de commande de liaison descendante physique, PDCCH, et un canal partagé de liaison descendante physique, PDSCH,
un module de démodulation PDSCH configuré pour déterminer, en fonction de la signalisation RRC, si un premier tableau de modulation et de code, MCS, ou un second tableau MCS doit être utilisé,
un module de génération d'indicateur de qualité de canal, CQI, configuré pour déterminer, en fonction de la signalisation RRC, si un premier tableau CQI ou un second tableau CQI doit être utilisé,
le premier tableau CQI et le second tableau CQI incluent chacun un indice CQI, un procédé de modulation et un taux de codage,
le procédé de modulation inclus dans le premier tableau CQI inclut des informations associées à QPSK, 16-QAM et 64-QAM, et
le procédé de modulation inclus dans le second tableau CQI inclut des informations associées à QPSK, 16-QAM, 64-QAM et 256-QAM,
le premier tableau MCS et le second tableau MCS incluent chacun un indice MCS, un procédé de modulation et un indice de taille de bloc de transport, TBS, le procédé de modulation inclus dans le premier tableau MCS inclut des informations associées à QPSK, 16-QAM et 64-QAM, et
le procédé de modulation inclus dans le second tableau MCS inclut des informations associées à QPSK, 16-QAM, 64-QAM et 256-QAM,
dans lequel le module de démodulation PDSCH utilise le premier tableau MCS ou le second tableau MCS en fonction de la signalisation RRC au cas où il est détecté que le PDSCH est programmé par le PDCCH en utilisant un contrôle de redondance cyclique, CRC, brouillé par un identifiant temporaire de réseau radio cellulaire, C-RNTI,
le module de démodulation PDSCH utilise le premier tableau MCS même s'il est déterminé d'utiliser le second tableau MCS en fonction de la signalisation RRC au cas où il est détecté que le PDSCH est programmé par le PDCCH en utilisant un CRC brouillé par un identifiant temporaire de réseau radio cellulaire à programmation semi-persistante, SPS C-RNTI,
le module de génération CQI utilise le second tableau CQI au cas où il est déterminé d'utiliser le second tableau CQI en fonction de la signalisation RRC.

2. Appareil de terminal selon la revendication 1, dans lequel le module de génération CQI utilise le premier tableau CQI pour un certain ensemble de sous-trames déterminé pour utiliser le premier tableau CQI, et utilise le second tableau CQI pour un autre certain ensemble de sous-trames déterminé pour utiliser le second tableau CQI.

3. Procédé exécuté par un appareil de terminal qui communique avec un appareil de station de base dans un système LTE, le procédé comprenant :
une étape consistant à recevoir, de l'appareil de station de base, une signalisation RRC, un PDCCH et un PDSCH,
une étape consistant à déterminer, en fonction de la signalisation RRC, si un premier tableau MCS ou un second tableau MCS doit être utilisé,
une étape consistant à déterminer, en fonction de la signalisation RRC, si un premier tableau CQI ou un second tableau CQI doit être utilisé,
le premier tableau CQI et le second tableau CQI incluent chacun un indice CQI, un procédé de modulation et un taux de codage,
le procédé de modulation inclus dans le premier tableau CQI inclut des informations associées à QPSK, 16-QAM et 64-QAM, et
le procédé de modulation inclus dans le second tableau CQI inclut des informations associées à QPSK, 16-QAM, 64-QAM et 256-QAM,
le premier tableau MCS et le second tableau MCS incluent chacun un indice MCS, un procédé de modulation et un indice TBS,
le procédé de modulation inclus dans le premier tableau MCS inclut des informations associées à QPSK, 16-QAM et 64-QAM, et
le procédé de modulation inclus dans le second tableau MCS inclut des informations associées à QPSK, 16-QAM, 64-QAM et 256-QAM,
dans lequel l'étape de détermination du tableau MCS détermine d'utiliser le premier tableau MCS ou le second tableau MCS en fonction de la signalisation RRC au cas où il est détecté que le PDSCH est programmé par le PDCCH en utilisant un CRC brouillé par C-RNTI,
l'étape de détermination du tableau MCS détermine d'utiliser le premier tableau MCS même s'il est déterminé d'utiliser le second tableau MCS en fonction de la signalisation RRC au cas où il est détecté que le PDSCH est programmé par le PDCCH en utilisant un CRC brouillé par SPS C-RNTI,
l'étape de détermination du tableau CQI détermine d'utiliser le second tableau CQI au cas où il est déterminé d'utiliser le second tableau CQI en fonction de la signalisation RRC.

4. Procédé selon la revendication 3, dans lequel
l'étape de détermination du tableau CQI détermine d'utiliser le premier tableau CQI pour un certain ensemble de sous-trames, et détermine d'utiliser le second tableau CQI pour un autre certain ensemble de sous-trames.

5. Appareil de station de base configuré pour communiquer avec un appareil de terminal, dans un système LTE, l'appareil de station de base comprenant :
un module de transmission DL configuré pour transmettre, à l'appareil de terminal, une signalisation RRC, un PDCCH et un PDSCH,
un module de réglage MCS configuré pour déterminer, en fonction de la signalisation RRC, si un premier tableau MCS ou un second tableau MCS doit être utilisé,
un module d'extraction CQI configuré pour déterminer, en fonction de la signalisation RRC, si un premier tableau CQI ou un second tableau CQI doit être utilisé,
le premier tableau CQI et le second tableau CQI incluent chacun un indice CQI, un procédé de modulation et un taux de codage,
le procédé de modulation inclus dans le premier tableau CQI inclut des informations associées à QPSK, 16-QAM et 64-QAM, et
le procédé de modulation inclus dans le second tableau CQI inclut des informations associées à QPSK, 16-QAM, 64-QAM et 256-QAM,
le premier tableau MCS et le second tableau MCS incluent chacun un indice MCS, un procédé de modulation et un indice TBS,
le procédé de modulation inclus dans le premier tableau MCS inclut des informations associées à QPSK, 16-QAM et 64-QAM, et
le procédé de modulation inclus dans le second tableau MCS inclut des informations associées à QPSK, 16-QAM, 64-QAM et 256-QAM,
dans lequel le module de réglage MCS utilise le premier tableau MCS ou le second tableau MCS en fonction de la signalisation RRC au cas où le PDSCH doit être programmé par le PDCCH incluant un CRC brouillé par C-RNTI,
le module de réglage MCS utilise le premier tableau MCS même s'il est déterminé d'utiliser le second tableau MCS en fonction de la signalisation RRC au cas où le PDSCH doit être programmé par le PDCCH incluant un CRC brouillé par SPS C-RNTI,
le module d'extraction CQI utilise le second tableau CQI au cas où il est déterminé d'utiliser le second tableau CQI en fonction de la signalisation RRC.

6. Appareil de station de base selon la revendication 5, dans lequel le module d'extraction CQI utilise le premier tableau CQI pour un certain ensemble de sous-trames déterminé pour utiliser le premier tableau CQI, et utilise le second tableau CQI pour un autre certain ensemble de sous-trames déterminé pour utiliser le second tableau CQI.

7. Procédé exécuté par un appareil de station de base qui communique avec un appareil de terminal, dans un système LTE, le procédé comprenant :
une étape consistant à transmettre, à l'appareil de terminal, une signalisation RRC, un PDCCH et un PDSCH,
une étape consistant à déterminer, en fonction de la signalisation RRC, si un premier tableau MCS ou un second tableau MCS doit être utilisé,
une étape consistant à déterminer, en fonction de la signalisation RRC, si un premier tableau CQI ou un second tableau CQI doit être utilisé,
le premier tableau CQI et le second tableau CQI incluent chacun un indice CQI, un procédé de modulation et un taux de codage,
le procédé de modulation inclus dans le premier tableau CQI inclut des informations associées à QPSK, 16-QAM et 64-QAM, et
le procédé de modulation inclus dans le second tableau CQI inclut des informations associées à QPSK, 16-QAM, 64-QAM et 256-QAM,
le premier tableau MCS et le second tableau MCS incluent chacun un indice MCS, un procédé de modulation et un indice TBS,
le procédé de modulation inclus dans le premier tableau MCS inclut des informations associées à QPSK, 16-QAM et 64-QAM, et
le procédé de modulation inclus dans le second tableau MCS inclut des informations associées à QPSK, 16-QAM, 64-QAM et 256-QAM,
dans lequel l'étape de détermination du tableau MCS détermine d'utiliser le premier tableau MCS ou le second tableau MCS en fonction de la signalisation RRC au cas où le PDSCH doit être programmé par le PDCCH incluant un CRC brouillé par C-RNTI,
l'étape de détermination du tableau MCS détermine d'utiliser le premier tableau MCS même s'il est déterminé d'utiliser le second tableau MCS en fonction de la signalisation RRC au cas où le PDSCH doit être programmé par le PDCCH incluant un CRC brouillé par SPS C-RNTI,
l'étape de détermination du tableau CQI détermine d'utiliser le second tableau CQI au cas où il est déterminé d'utiliser le second tableau CQI en fonction de la signalisation RRC.

8. Procédé selon la revendication 7, dans lequel
l'étape de détermination du tableau CQI détermine d'utiliser le premier tableau CQI pour un certain ensemble de sous-trames, et détermine d'utiliser le second tableau CQI pour un autre certain ensemble de sous-trames.
